# EUROPEAN PATENT APPLICATION

(11) **EP 0 830 022 A2**
(43) Date of publication of application: **18.03.1998**
(21) Application number: 97307214.3
(22) Date of filing: 17.09.1997
(51) Int. Cl.: H04N 5/783

(54) **Systems for changing the playback time of recorded image signals**

(30) Priority: 17.09.1996 US 715039
(71) Applicant: SONY ELECTRONICS INC., Park Ridge, New Jersey 07656-8003 (US); SONY CORPORATION, Tokyo 141 (JP)
(72) Inventor: Ogawa, Tesuo, c/o Intellectual Property Dept., Shinagawa-ku, Tokyo 141 (JP); Kiriyama, Hiroshi, C/o Intellectual Property Dept., Shinagawa-ku, Tokyo 141 (JP); Kato, Tomokiyo, c/o Intellectual Property Dept., Shinagawa-ku, Tokyo 141 (JP); Kikuchi, Hiroaki, C/o Intellectual Property Dept., Shinagawa-ku, Tokyo 141 (JP); Freeman, Luke, Redwood City, CA 94065 (US)
(74) Representative: Williams, Janice

(57) **Abstract**

An image signal playback time changing method which causes a synchronization signal generating device (16) to generate a plurality of synchronization signals which have field frequencies which differ from a predetermined absolute standard synchronization signal based on a playback speed control signal. One of the above mentioned synchronization signals is provided as an outer standard signal to a modification digital video tape player (17) to change the playback speed of an image signal recorded in a video recording medium (13). A field frequency converting device (19) causes the field frequency of the playback image signal from the playback device (17) to equal the frequency of the predetermined absolute standard synchronization signal. As a result, this image signal playback time changing method can change the playback time of the image signal recorded in the video recording medium (13) while preventing the deterioration of the quality of the image signal.

## Description

The present invention relates to the field of image processing systems. In a particular example it relates to a method of controlling the playback speed of an image signal recorded on a recording medium based on a playback speed control signal and changing the playback time of the image signal.

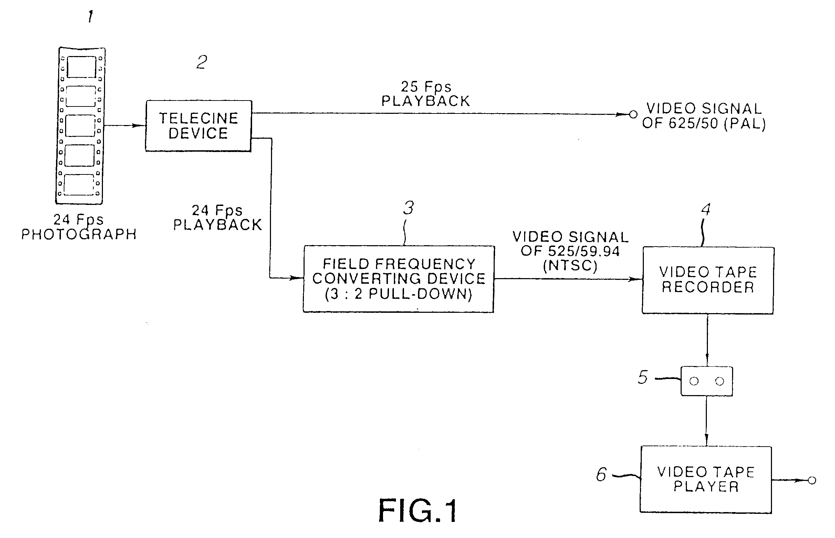

Until now, in order to convert image information photographed on a movie film into a standard image signal having an NTSC (National Television System Committee) format or a PAL (Phase Alternating by Line) format, a system such as shown in Fig. 1 would be used, such system having a telecine device which is an image reading device.

In a PAL image signal, such as is mainly used in Europe, the scanning line number/field frequency (Hz) is 625/50; that is, 625 lines/image and 50 fields/sec (or 25 frames/sec, where a frame is equal to two fields). On the other hand, in an NTSC image signal which is mainly used in U.S. and Japan, the ratio is 525/59.94; that is; 525 lines/image and 59.94 fields/sec (approximately 30 frames/sec). (It will be understood that more accurately the field frequency is 60/1.001 = 59.94005994; however, for simplicity, it will be represented hereafter as 525/59.94).

As known to those skilled in the art, a movie film I is normally photographed at 24 frames per second. In order to reproduce images from film to video, the number of images (or frames) per unit time and the number of lines per image must be adjusted. Thus, as seen in the system shown in Fig.1, in order to obtain an image signal having 625 lines/image and 50 fields/sec (PAL), the telecine device 2 is set to have a playback speed of 25 frames per second. On the other hand, in order to obtain an image signal having 525 lines/image and 59.94 fields/sec (NTSC) the telecine device 2 is set to have a playback speed of 24 frames per second (or more accurately, 24/1.001 = 23.97602398) which is similar to the photographing speed of the film. The output signal in the latter case, then must be supplied to a field frequency converting device 3 which sets the field frequency to 59.94 Hz preferably via a 3:2 pull down, or 3-2 cadence processing scheme.

However in any film to video conversions, where it is required to alter the format in order to place an image signal obtained by the system shown in Fig. 1 in a specific time frame, there is a concern that the quality of the image signal may deteriorate for the following reason.

As shown in Fig.1, the field frequency converting device 3 records an image signal of 525/59.94 (NTSC) using a 3:2 processing scheme on a video cassette tape 5 via video tape recorder 4. Then, a playback of the video cassette tape 5 is carried out by a video tape player 6. As known in the art, a PAL-formatted video has a display rate of 50 fields, or 25 frames, per second. Given the proximity of this frame rate to that of the 24 frames per second of the motion picture film 1, conversion of a motion picture film 1 to a PAL-formatted video is generally accomplished by creating two video fields per motion picture frame and increasing the speed of the recorded film by 4%. In the past, this has generally been acceptable. However, a NTSC-formatted video has a display rate of 60 fields, or 30 frames, per second. As the motion picture film I results in only 48 fields per second (2x 24 frames/second), 6 additional frames, i.e., 12 additional video fields, must be generated. This is generally accomplished via a process known as "3:2 pull-down processing" or "3:2 cadencing".

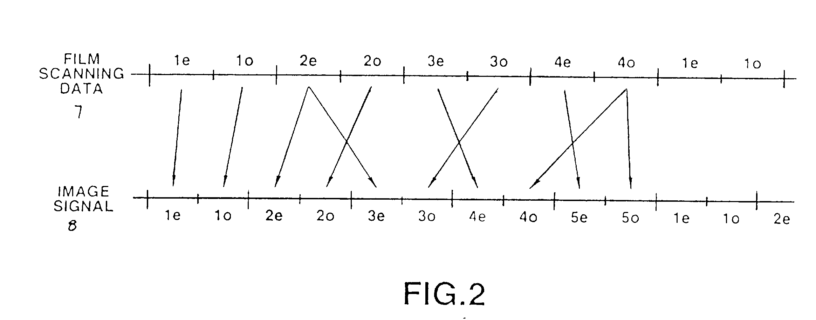

In a 3:2 pull-down processing sequence, the scanning data of each frame of the motion picture film 1 is divided into even and odd fields, "e" and "o", respectively, for copying onto a video medium to form a desired image signal. The video medium is divided into frames, which also comprise two fields; again, even and odd fields. As seen with reference to Fig. 2, a first video frame onto which the image signal 8 is recorded is derived from a first frame of the scanning data of motion picture film 1, wherein the scanning data from field "1e" of the first frame is copied to field "1e" of the video frame. Similarly, the scanning data from field " lo" of the first motion picture frame is copied to field "1o" of the video frame. A second video frame derived from a second frame of the scanning data of motion picture film 1, is then divided into video fields "2e" and "20". Field "2e" is then copied, or repeated, after video field "2o", as "3e". Information derived from a third frame of the scanning data is then copied as video fields "30" and "4e", and information derived from a fourth frame of the scanning data of motion picture film 1 is then copied into video fields "4o" and "5e". Field "4o" is copied, or repeated, after video field "5e", as "5o". This pattern of field insertions is repeated every ten fields. More detail as to the 3:2 pull-down processing sequence may be seen in U.S. Patent Nos. 5,292,427 and 5,461,420, assigned to the assignee of the present invention, and incorporated by reference herein.

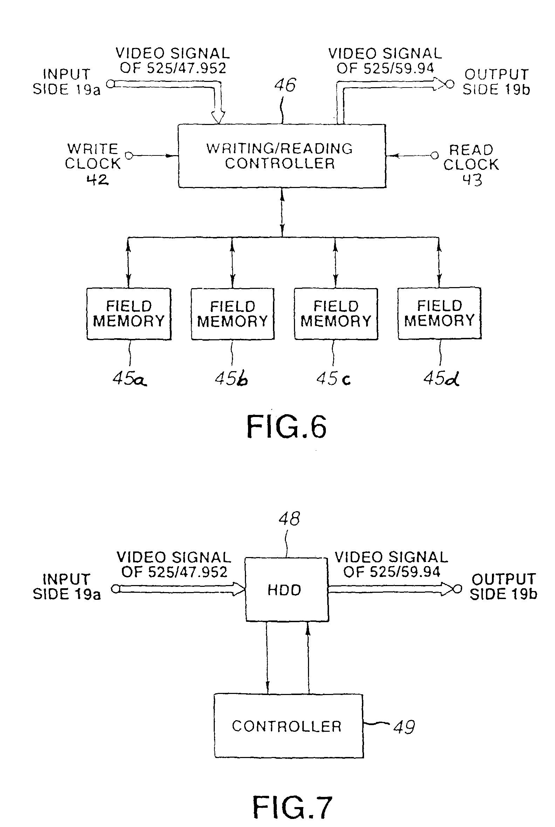

It will be understood with reference to FIG. 2, that as each video frame is made of two video fields, and because of the copying of a field from one motion picture frame to a subsequent video frame (e.g., "2e" of the motion picture film to "2e" and "3e"), there will be certain video frames which are derived from different motion picture frames, and thus from different times. That is, in the NTSC image signal created by the 3:2 pull down processing sequence there exists certain video frames which, being derived from the same motion picture film frame, have no temporal difference (e.g., le and lo) while other video frames, being derived from different motion picture film frames have time differences (e.g., 3e and 3o, respectively derived from motion picture film fields 2e and 3o). This may result in a fuzzy picture during playback, as may be seen in more detail in FIG. 7 of U.S. Patent No. 4,998,167, (Jaqua), which is incorporated by reference herein. To account for such problem, during playback, the video tape player 6 plays back the image signal by either skipping the field of the image or by playing the field of the image twice. However, in the case where the same field is repeated when the video tape player 6 plays back the image signal, the quality of the image signal generally deteriorates.

In accordance with one aspect of the invention there is provided an image signal playback time changing method as set forth in claim 1.

Embodiments of the present invention provide an image signal playback time changing method which can change the playback time while protecting the quality deterioration of the image signal.

In accordance with another aspect of the invention, there is provided an image signal playback time changing method, such method causing a synchronization signal generating device to generate a plurality of synchronization signals having field frequencies which differ from a predetermined absolute standard synchronization signal based on a playback speed control signal. One of the above mentioned plurality of synchronization signals is provided as an outer standard signal to a modification digital video tape player to change the playback speed of an image signal recorded in a video recording medium, and to cause a field frequency converting device to make the field frequency of the playback image signal from the modification digital video tape player equal to the frequency of the predetermined absolute standard synchronization signal. This thus controls the playback speed of the image signal recorded in the video recording medium based on the playback speed control signal and changes the playback time of the image signal.

In accordance with one embodiment of the invention, the converting process increases the field frequency of the playback image signal from the playback process by 5/4 times.

In accordance with another embodiment of the invention, the converting process increases the field frequency of the playback image signal from the playback process by 6/5 times.

Embodiments of the invention will now be described, by way of example, with reference to the accompanying drawings in which:

Fig.1 is a block diagram showing a configuration of a conventional image signal playback time changing system.

Fig.2 is a diagram explaining a 3 : 2 pull-down processing method.

Fig.3 is a block diagram showing an embodiment of an image signal playback time changing method in accordance with one embodiment of the present invention.

Fig.4 is a block diagram showing an embodiment of a servo system of the modification digital video tape recorder used in the embodiment of Fig. 3.

Fig.5 is a diagram explaining the 3 : 2 pull-down processing scheme carried out in a field frequency converting device used in the embodiment of Fig. 3.

Fig.6 is a block diagram showing one embodiment of a field frequency converting device which implements the 3:2 pull-down processing scheme of Fig. 5.

Fig.7 is a block diagram showing another embodiment of the field frequency converting device which implements the 3 : 2 pull-down processing scheme of Fig. 5.

Fig.8 is a block diagram showing another embodiment of the image signal playback time changing method of the present invention using a 3:2:3:2:2 pull-down processing scheme.

Fig.9 is a view for explaining a 3 : 2 : 3 : 2 : 2 pull-down processing scheme used in the field frequency converting device, in the case when a playback operation of -0.1 % is carried out by the embodiment of Fig. 8.

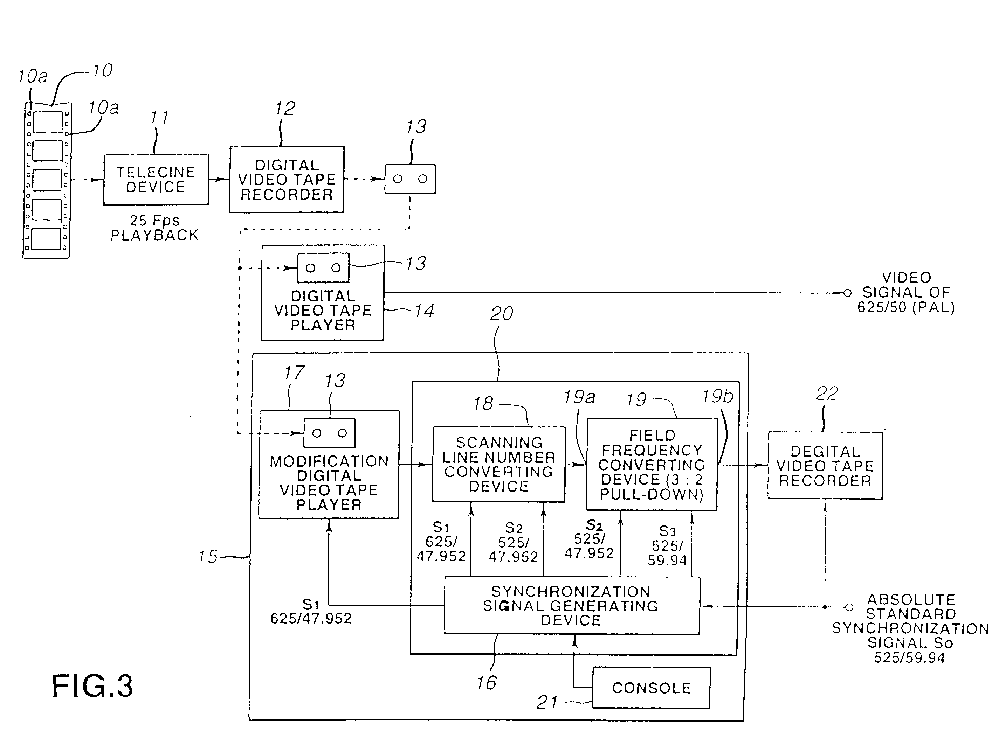

An embodiment of an image signal playback time changing method in accordance with the present invention will now be explained with reference to Fig. 3.

As shown therein, the image signal playback time changing system 15 includes a synchronization signal generating device 16, a modification digital video tape player 17, a scanning line number converting device 18, and a field frequency converting device 19. The synchronization signal generating device 16, scanning line number converting device 18 and the field frequency converting device 19 are preferably included in one device, the adapter 20. In operation, the synchronization signal generating device 16 generates a plurality of synchronization signals (S₁, S₂, S₃) whose field frequencies differ from a predetermined absolute standard synchronization signal the latter signal of which is based on the playback speed control signal from console 21. The modification digital video tape player 17 receives, as a standard signal, one of the above plurality of synchronization signals generated by the synchronization signal generating device 16 (S₁, or 625/47.952, in Fig. 3), and changes the playback speed of the image signal recorded in the video tape cassette 13 of modification digital video tape player 17. An output from modification digital video tape player 17 is provided to the scanning line number converting device 18 which converts the scanning line number of the playback image signal from the modification digital video tape player 17. The field frequency converting device 19 then converts the field frequency of the playback image signal from the the scanning line number converting device 18 into the same frequency as the predetermined absolute standard synchronization signal.

After the conversion, the image signal in which the playback time is changed by the image signal playback time changing system 15 is recorded and stored in another video tape cassette in a digital video tape recorder 22, and the playback thereof is carried out as desired.

Recordation of the image signal onto video tape cassette 13 is described in more detail below. The telecine device 11 carries out, at 25 frames per second (Fps), the playback of image information recorded on a movie film 10, and generates an image signal having a scanning line number of 625 and a field frequency of 50 (Hz) (PAL). Then, a digital video tape recorder 12 records the above mentioned image signal at its original scanning line number/field frequency. That is, the image signal of 625/50 is recorded in the video tape cassette 13. Next a predetermined absolute standard synchronization signal is set, which, by way of example, in the embodiment of Fig. 3, is 525/59.94. Further, a playback speed control signal is set from the console 21 for example, such is a signal being set to indicate a slow playback of -4. 1 %. It will be appreciated that other predetermined standard synchronization signals and playback speed control signals may be used.

The synchronization signal generating device 16 generates a plurality of synchronization signals e.g., S₁ (625/47.952), S₂ (525/47.952) and S₃ (525/59.94) which differ from an absolute standard synchronization signal Sₒ of 525/59.94 based on the above mentioned playback speed control signal. The modification digital video tape player 17 receives, as the outer standard signal, the synchronization signal S₁ (625/47.952) generated by the synchronization signal generating device 16 and changes the playback speed of the image signal of 625/50 recorded in the video tape cassette 13 accordingly. Thus, the image signal playback time changing system 15 controls the a playback speed of an image signal recorded on a video tape cassette 13 based on a playback speed control signal from a console 21 and also changes the playback time of the image signal.

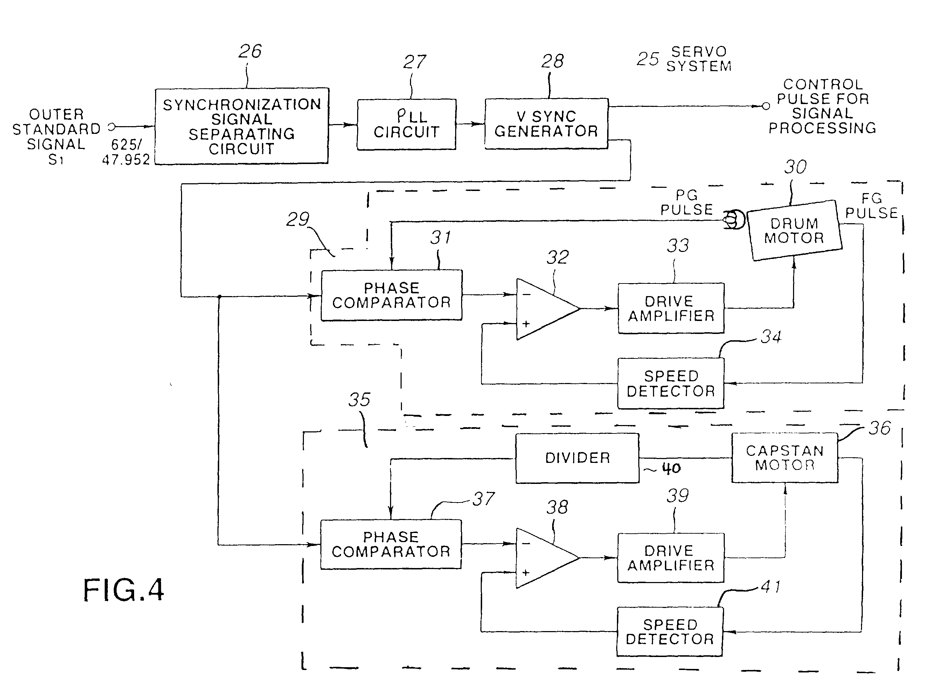

The above can be accomplished since the modification digital video tape player 17 includes a servo system 25 as shown in more detail in Fig.4. The outer standard signal S₁ (625/47.952) which is output from the synchronization signal generating device 16 is sent to a synchronization signal separating circuit 26. The synchronization signal separating circuit 26 extracts a horizontal synchronization signal from the outer standard signal of 625/47.952, and then sends the extracted signal to a phase lock loop (PLL) circuit 27. A clock signal outputted by the PLL circuit 27 is sent to a vertical synchronization (V_{sync}) generator 28 which generates a vertical synchronization signal. The vertical synchronization signal generated by the V_{sync} generator 28 is sent to a drum servo system 29 and a capstan servo system 35. The V_{sync} generator 28 generates various control pulses needed in a video audio signal processing.

In the drum servo system 29 (shown in dashed line in Fig. 4), the phase of a drum rotation pulse (PG) from a drum motor 30 is compared with that of the vertical synchronization signal by a phase comparator 31. A phase control signal output from the phase comparator is sent to an inverting input terminal of an operating amplifier 32. A speed control signal, which is generated by a speed detector 34 from a frequency generating pulse from the drum motor 30, is also sent to the operating amplifier 32. An operating output of the operating amplifier 32 is amplified by a drive amplifier 33, and sent to the drum motor 30, and is used in order to correct displacements of the rotation number and rotation phase of the drum motor 30.

In the capstan servo system 35 (also shown in dashed lines), the phase of a signal, into which the playback control signal which is divided by a divider 40, is compared with that of the vertical synchronization signal by a phase comparator 37. Á phase control signal output from the phase comparator 37 is sent to an inverting input terminal of an operating amplifier 38. A speed control signal, which is detected by a speed detector 41 from a frequency generating pulse from the capstan motor 36, is also sent to the operating amplifier 38. The output of the operating amplifier 38 is amplified by a drive amplifier 39 and sent to a capstan motor 36, and is used in order to correct displacements of a rotation number and a rotation phase at the capstan motor 36.

Referring back to Fig. 3, the output of the modification digital video tape player 17 is provided to the adapter portion 20, which again preferably includes a scanning line number converting device 18, the field frequency converting device 19, and the synchronization signal generating device 16. The scanning line number converting device 18 carries out a scanning line interpolation for the scanning line number from 625 to 525, based on the two synchronization signals S₁ and S₂ provided from the synchronization signal generating device 16. The scanning line number converting device 18 accomplishes the scanning line of 525 by vertically filtering a scanning line of 625 from an active line of 576 to an active line of 486. Vertical resolution in a case of a scanning line of 625 is higher than a vertical resolution in a case of a scanning number of 525. This results in no loss of the vertical resolution in a later resampling process, and thereby it is possible to expect a high quality image.

The field frequency converting device 19 converts a field frequency from 47.952 Hz to 59.94 Hz by carrying out the 3:2 pull-down processing scheme scheme using the two synchronization signals S₂ and S₃ from the synchronization signal generating device 16.

Referring to Fig. 6, one embodiment of the field frequency converting device 19 is shown. A video signal having a field frequency of 47.952 Hz is scanned via interlaced scanning. An even field on an input side 19a is converted into an even field on an output side 19b, and an odd field on the input side 19a is converted into an odd field on the output side 19b. Since the image signal on the input side 19a depends on an image output of the telecine device 11, there is no time difference within the same frame. For this reason, the image signal converted into the output side 19b does not induce momentary distortion. For four frames on the input side, one frame is newly generated on the output side. However, since interference is not induced in a field within the frame, the image is stable.

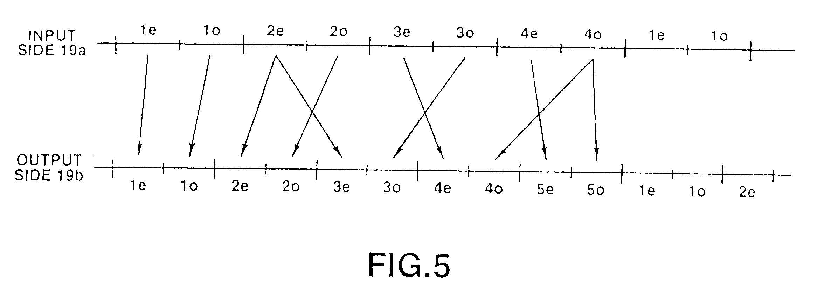

This field frequency converting device 19 may carry out the 3:2 pull-down processing, for example, by using four field memories 45ₐ, 45_{b}, 45_{c} and 45_{d}, as shown in more detail in Fig.6. The video signal having 525/47.952 from the input side 19a is sequentially written into the four field memories 45ₐ, 45_{b}, 45_{c} and 45_{d} under the control of a writing controller 46. A reading operation is carried out at a speed 5/4 times the speed at the time of writing under the control of a reading controller 46, and is read out from each of the field memories 45ₐ, 45_{b}, 45_{c} and 45_{d} at an order as shown in Fig.5. The writing/reading controller 46 controls the writing/reading operation of the field memories 45ₐ, 45_{b}, 45_{c} and 45_{d} based on writing clock and a reading clock signals 42, 43. However, it will be appreciated that if large amounts of data are processed, it is expected that memory size and cost would likely increase.

In an alternate embodiment of the field frequency converting device 19 (Fig. 7), a hard disk drive (HDD) 48 is used to carry out the 3 : 2 pull-down processing. In such embodiment, the video signal of 525/47.952, from the scanning line number converting device 18, is first stored in the HDD 48. After that, a reading field according to the 3 : 2 pull-down sequence is specified by an outer controller 49, and the specified field is read out. Thus, the scanning line number converting device 18 uses a random access function of the HDD 48 to carry out the 3 : 2 pull-down processing.

In this way, this image signal playback time changing system 15 can carry out a slow playback at -4.1 % for the image signal of 625/50 recorded in the video tape cassette 13. Furthermore, after the playback speed is changed by the modification digital video player 17, the 3:2 pull-down processing is carried out for the playback image signal by the field frequency converting device 19. Therefore, the image signal, in which the same field is repeated by the 3:2 pull-down processing like the conventional system, is not repeated again. As a result, the quality of the image signal is preserved. It will be noted that, if the playback for the image signal of 625/50 recorded in the video tape cassette 13 is carried out by the digital video tape player 14 at its original scanning line number/field frequency, the playback image signal will be 625/50.

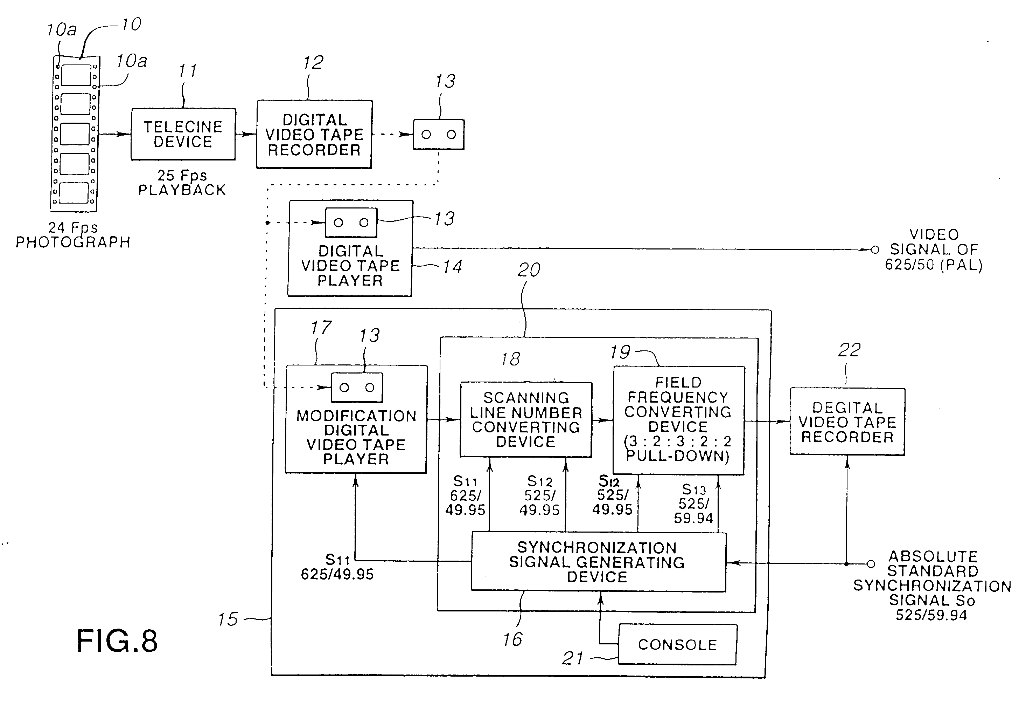

The operation of the image signal playback time changing system 15 will now be explained with reference to Fig.8, for that case where the playback speed control time desired by the console 21 is a signal for indicating a slow playback of -0.1 %.

Similar to the above embodiment, the synchronization signal generating device 16 generates a plurality of synchronization signals S₁₁ (625/49.95), S₁₂ (525/49.95) and S₁₃ (525/59.94) having frequencies which differ from an absolute standard synchronization signal S₀ of 525/59.94 based on the above mentioned playback speed control signal.

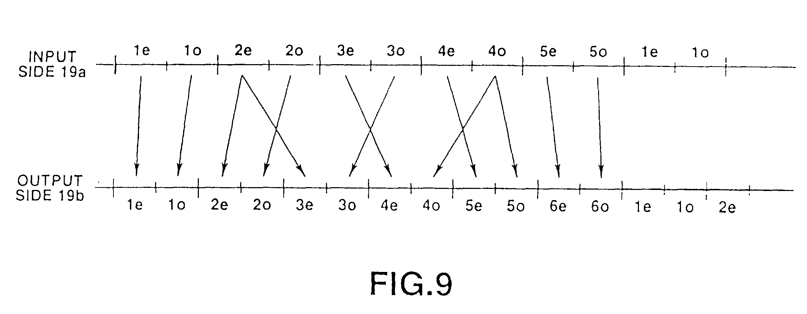

The modification digital video tape player 17 receives, as the outer standard signal, the synchronization signal S₁₁ (625/49.95) among the above mentioned plurality of synchronization signals S₁₁ to S₁₃, generated by the synchronization signal generating device 16 and changes the playback speed of the image signal of 625/50 recorded in the video tape cassette 13, accordingly. This change of the playback speed is carried out by the servo system 25 as shown in Fig.4. The scanning line number converting device 18 carries out the scanning line interpolation for the scanning line number from 625 to 525, by means of the two synchronization signals of S₁₁ (625/49.95) and S₁₂ (525/49.95) from the synchronization signal generating device 16. The field frequency having a valve converting device 19 converts the first field frequency into a frequency having a value 6/5 times as great. That is, it converts it from 49.95 Hz to 59.94 Hz, by means of a so-called 3:2:3:2:2 pull-down processing which uses the two synchronization signals S₁₂ (525/49.95) and S₃ (525/59.94) from the synchronization signal generating device 16. This 3:2:3:2:2 pull-down processing method will be explained hereafter with reference to Fig.9.

A video signal having a field frequency of 49.95 Hz is scanned by an interlaced scanning. An even field on an input side 19a is converted into an even field on an output side 19b, and an odd field on the input side 19a is converted into an odd field on the output side 19b. Since the image signal on the input side 19a depends on the image output of the telecine device 11, there is no time difference within the same frame. For this reason, the image signal converted into the output side 19b does not induce temporal disturbance. For five frames on the input side, one frame is newly generated on the output side. However, since interference is not induced in the field order within the frame, the image is stable.

A field frequency converting process in this case may carry out the reading operation at a speed 6/5 times the speed at the time of writing, by using five field memories. However, if implemented by using the HDD such as shown in Fig. 7, it is possible to use a random access function. In either case, the image signal playback time changing system 15 can carry out the slow playback at -0.1 % for the image signal of 625/50 recorded in the video tape cassette 131. After the playback speed is changed by the modification digital video player 17, the 3:2:3:2:2 pull-down processing for the playback image signal is carried out by the field frequency converting device 19. Thus, the image signal, in which the same field is repeated like the conventional system, is not repeated again. As a result, it is possible to prevent the deterioration of the quality of the image signal.

Importantly, the field frequency conversion carried out in the field frequency converting device 19, may alternatively use both the 3 : 2 pull-down processing and the 3 : 2 : 3 : 2 : 2 pull-down processing. In such a case, it is possible to carry out the playback at a speed of 40/49 times. And, if the 3 : 2 pull-down processing and the 3 : 2 : 3 : 2 : 2 pull-down processing are used at a ratio of 2 : 1, it is possible to carry out the playback at a speed of 60/74 times. In general, a pull-down sequence of a in : n pull-down corresponding to the playback speed is prepared in advance, and the pull-down sequence is switched on the basis of the playback speed.

Many widely different embodiments of the present invention may be constituted without departing from the scope of the present invention. It should be understood that the present invention is not limited to the specific embodiment described in the specification.

## Claims

1. An image signal playback time changing method of changing the playback speed of an image signal recorded in a recording medium based on a playback speed control signal and changing the playback time of the image signal, characterized in that said image signal playback time changing method comprises:
a synchronization signal generating step of generating a plurality of synchronization signals which differentiate frequencies from a predetermined absolute standard synchronization signal based on said playback speed control signal;
a playback step of receiving, as an outer standard signal, one of said plurality of synchronization signals generated by said synchronization signal generating process and changing the playback speed of the image signal recorded in said recording medium; and,
a converting step of making a field frequency of a playback image signal from said playback process equal to a frequency of said predetermined absolute standard synchronization signal.

2. An image signal playback time changing method according to claim 1, wherein said predetermined absolute standard synchronization signal is 525/59.94.

3. An image signal playback time changing method according to claim 1, wherein said converting step increases the field frequency of the playback image signal from said playback step by 5/4 times.

4. An image signal playback time changing method according to claim 1, wherein said converting step increases the field frequency of the playback image signal from said playback process by 6/5 times.
